(19) Europäisches Patentamt / European Patent Office / Office européen des brevets

(11) **EP 2 033 015 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(51) Int Cl.:
**G01T 1/208** (2006.01)  **G01T 1/17** (2006.01)

(21) Anmeldenummer: **07725913.3**

(22) Anmeldetag: **08.06.2007**

(86) Internationale Anmeldenummer:
**PCT/EP2007/005072**

(87) Internationale Veröffentlichungsnummer:
**WO 2007/147488 (27.12.2007 Gazette 2007/52)**

(54) **PHOTONENDETEKTOR**

PHOTON DETECTOR

DÉTECTEUR DE PHOTONS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.06.2006 US 815833 P**
**24.06.2006 DE 102006029184**

(43) Veröffentlichungstag der Anmeldung:
**11.03.2009 Patentblatt 2009/11**

(73) Patentinhaber: **Friedrich-Alexander-Universität Erlangen-Nürnberg**
**91054 Erlangen (DE)**

(72) Erfinder:
• **ANTON, Gisela**
**91052 Erlangen (DE)**
• **MICHEL, Thilo**
**90429 Nürnberg (DE)**

(74) Vertreter: **Hofmann, Matthias et al**
**Rau, Schneck & Hübner**
**Patentanwälte**
**Königstrasse 2**
**90402 Nürnberg (DE)**

(56) Entgegenhaltungen:
**WO-A-03/028067**   **CA-A1- 2 331 108**
**US-A1- 2006 011 849**

• **WYLLIE K ET AL: "Readout of the LHCb pixel hybrid photon detectors" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, Bd. 546, Nr. 1-2, 1. Juli 2005 (2005-07-01), Seiten 86-92, XP004936035 ISSN: 0168-9002**

EP 2 033 015 B1

**Beschreibung**

Die Erfindung betrifft einen Photonendetektor nach dem Oberbegriff des Anspruchs 1.

Ausführungen derartiger Photonendetektoren mit einem Pixel-Array sind bekannt aus einem Vorlesungsskript von Thierry GYS "Particle Detectors - Principles and Techniques (3/5)", Lecture 3b, CERN Academic Training Programme 2004/2005.

Mit einem solchen Photonendetektor lässt sich eine Ortsinformation des auftreffenden Messphotons gewinnen. Zeitliche Informationen lassen sich durch Analyse des Analog-Messsignals, welches mit einer Auflösung von etwa 10 ns erfasst wird, entnehmen. Eine Verbindung der durch das Elektronendetektor-Pixel-Array gewonnenen Ortsinformation mit der Zeitinformation ist allenfalls sehr beschränkt möglich.

Im Fachartikel "Readout of the LHCb pixel hybrid photon detectors" von K. Wyllie et al., Nuclear Instruments & Methods in Physics Research A 546 (2005) Seiten 86 bis 92, ist ein hybrider Pixel-Photonendetektor nach dem Oberbegriff des Anspruchs 1 beschrieben.

Die US 2006/0011849 A1 beschreibt jeweils zwei Photomultiplier aufweisende Gammastrahlen-Detektoren, deren Umsetzeinrichtung zum Umsetzen eines Analog-Messsignals in ein Digital-Messsignal eine Zeitmessung beeinhaltet.

Es ist eine Aufgabe der vorliegenden Erfindung, einen Photonendetektor der eingangs genannten Art derart weiterzubilden, dass neben der Ortsinformation aus dem Messsignal auch die Information ableitbar ist, wann am jeweiligen Pixel das Messsignal ausgelöst wurde.

Diese Aufgabe ist erfindungsgemäß gelöst durch einen Photonendetektor mit den im Kennzeichnungsteil des Anspruches 1 angegebenen Merkmalen.

Erfindungsgemäß wurde erkannt, dass eine Messung mit hoher Zeitauflösung durch Verwendung eines Taktgebers und wenigstens einen die Anzahl der Taktzyklen erfassenden Zählers so möglich ist, dass neben der Ortsinformation auch die komplette Zeitinformation erfasst werden kann. Der Photonendetektor liefert Messdaten, aus denen sich rückschließen lässt, wann ein Messsignal an einem bestimmten Ort des Elektronendetektor-Pixel-Arrays ausgelöst wurde. Hierzu wird ausgenutzt, dass das zunächst analoge Messsignal nicht aufwändig mittels eines A/D-Wandlers digitalisiert wird, sondern schnell in ein digitales Zeitsignal, welches die Anzahl erfasster Taktzyklen repräsentiert, umgesetzt wird. Der Taktgeber kann beispielsweise eine Taktfrequenz von 500 MHz bereitstellen. Der Diskriminator dient insbesondere zur Untergrund-Unterdrückung.

Zählweisen nach den Ansprüchen 2 und 3 haben sich als für die Erzeugung des digitalen Zeitsignals vorteilhaft herausgestellt.

Eine Referenz-Zeitpunktvorgabe nach Anspruch 4 erfordert nur einen geringen Aufwand. Die Wiederholfrequenz der Referenz-Zeitpunktvorgabe kann beispielsweise 10 kHz betragen.

Eine Zähleranordnung nach Anspruch 5 ermöglicht eine Zeiterfassung ohne Totzeit. Auch über längere Zeiträume kann daher die komplette Ort- und Zeitinformation erfasst werden.

Eine Zähleranordnung nach Anspruch 6 führt zu einer Zeitauflösung, die besser ist, als anhand der Taktfrequenz eines Taktgebers bei Verwendung nur eines Zählers möglich. Die beiden Zähler können vom gleichen Taktgeber versorgt werden. Alternativ ist aber auch die Versorgung mit zwei synchronisierten Taktgebern möglich. Bei der Verwendung zweier Zähler, die vom gleichen Taktgeber versorgt werden, ist es möglich, den Takteingang eines der beiden Zähler gegenüber dem Takteingang des anderen der beiden Zähler zu verzögern, sodass die Taktimpulse, die vom ersten Zähler erfasst werden, zeitlich zwischen benachbarten Taktimpulsen liegen, die vom zweiten der beiden Zähler erfasst werden. Alternativ ist es möglich, das Diskriminatorsignal, welches an einem der beiden Zähler abgegeben wird, gegenüber dem Diskriminatorsignal, welches an den anderen der beiden Zähler abgegeben wird, zeitlich entsprechend zu verzögern, sodass auch hier im Ergebnis Taktimpulse, die vom ersten der beiden Zähler erfasst werden, zeitlich zwischen benachbarten Taktimpulsen liegen, die vom zweiten der beiden Zähler erfasst werden.

Eine Ausleseinheit nach Anspruch 7 ist schnell.

Weiterbildungen der Weiterverarbeitungseinrichtung nach den Ansprüchen 8 und 9 verringern die weiterzuverarbeitende Datenmenge.

Die Integration nach Anspruch 10 führt zu einem kompakten Photonendetektor.

Ein diskreter Pixelaufbau nach Anspruch 11 verringert die Gefahr eines Übersprechens der Pixel.

Ein Pixelaufbau nach Anspruch 12 lässt sich kompakt realisieren.

Eine Abschwächungsschicht nach Anspruch 13 verhindert, dass unerwünschte Fehl-Messsignale durch vom Elektronendetektor-Pixel-Array rückgestreute Messelektronen ausgelöst werden.

Ausführungsbeispiele der Erfindung werden nachfolgend anhand der Zeichnung näher erläutert. In dieser zeigen:

Fig. 1    schematisch ein zu messendes Photonenereignis auf einer Zeitskala zur Darstellung verschiedener hiermit verbundener Zeitabstände;

Fig. 2    eine Ausführung eines Photonendetektors;

Fig. 3    den Photonendetektor nach Fig. 2 während eines Messvorgangs, wobei im Vergleich zu Fig. 2 Details weggelassen sind;

Fig. 4    schematisch und stärker im Detail ein Pixel eines Elektronen- detektor- Pixel-Arrays des Photonendetektors nach Fig. 2;

Fig. 5    einen Ausschnitt aus dem Elektronendetektor-Pixel-Array, wobei einzelne Pixel im Vergleich zur Fig. 4 stärker schematisch dargestellt sind;

Fig. 6    einen zu Fig. 5 ähnlichen Ausschnitt einer weiteren Ausführungs form eines Elektronendetektor-Pixel-Arrays;

Fig. 7    schematisch ein Ablaufschema zur Erzeugung und Weiterleitung eines digitalen Zeitsignals im Photonendetektor unter Verwendung zweier Zähler pro Pixel, zwischen denen über eine Zählerwechsel- Steuereinrichtung synchronisiert und tot-zeitfrei gewechselt wird.

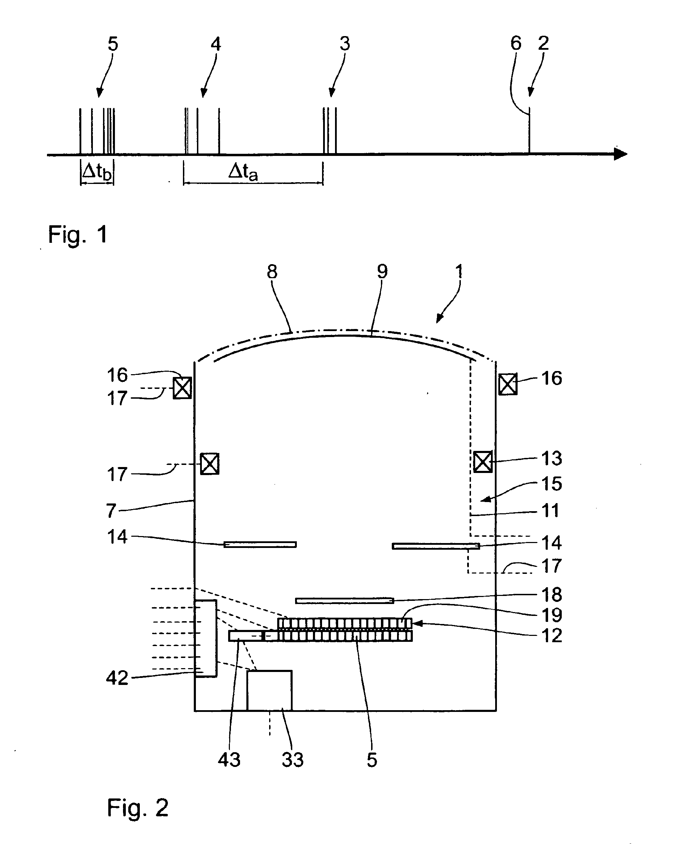

Mit einem in der Fig. 2 insgesamt mit 1 bezeichneten Photonendetektor wird als Messsignal eine zeitliche Abfolge von Photonenpulsen gemessen. Ein Beispiel für eine derartige zeitliche Abfolge von vier Photonenpulsen 2, 3, 4, 5, die auf eine nicht dargestellte Fläche fallen, zeigt Fig. 1. Ein Photonenpuls 2 bis 5 besteht aus mindestens einem Photon 6, welches innerhalb eines Zeitraums $t_b$, der als Photonenpulsdauer oder Photonenpulsbreite bezeichnet wird, auf die Fläche fällt. Zeitlich benachbarte Photonenpulse 2 bis 5 haben zueinander einen zeitlichen Abstand $t_a$, der Photonenpulsabstand genannt wird. Der mittlere Photonenpulsabstand einer Vielzahl aufeinanderfolgender Photonenpulse entspricht einer Frequenz, Repetitionsrate genannt. Während der Photonenpulsdauer eines Photonenpulses treffen einzelne Photonen 6 im Allgemeinen auf verschiedene Orte einer Messfläche. Jedes Photon 6 innerhalb eines Photonenpulses 2 bis 5 hat zu dem zeitlich am nächsten auf die Fläche einfallenden Photon 6 desselben Photonenpulses 2 bis 5 einen kurzen zeitlichen Abstand, Photonenabstand genannt, verglichen mit dem Photonenpulsabstand. Die Photonenabstände liegen zwischen Null und der Photonenpulsdauer. Es ist möglich, dass in einem oder mehreren Photonenpulsen nur jeweils ein Photon auf die Fläche trifft. Je nach zeitlicher Auflösung des Photonendetektors 1 kann dieser den Photonenabstand, die Photonenpulsbreite oder den Photonenpulsabstand auflösen.

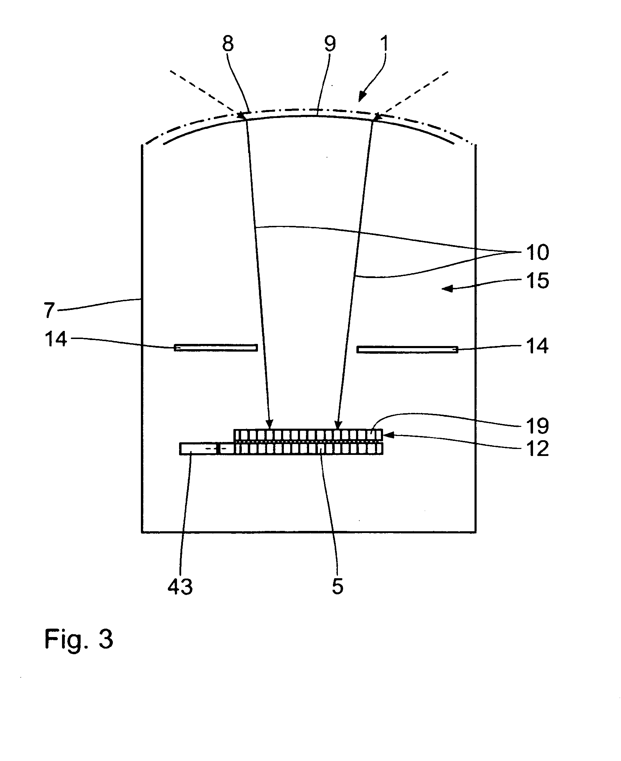

Der in der Fig. 2 dargestellte Photonendetektor 1 hat ein Gehäuse 7 mit einem in der Fig. 2 strichpunktiert dargestellten und für die Photonen 6 transparenten Eintrittsfenster 8. Das Gehäuse 7 umgibt eine direkt hinter dem Eintrittsfenster 8 angeordnete Photokathode 9. Die von Messphotonen beaufschlagbare Fläche der Photokathode 9 gibt gleichzeitig die Messfläche vor. Die Photokathode 9 besteht aus einer Schicht, aus der bei Einfall von Photonen 6 Photoelektronen ausgelöst werden können, deren Bahnen 10 beispielhaft in der Fig. 3 dargestellt sind. Nach dem Auslöseprozess befinden sich die Photoelektronen auf der dem Eintrittsfenster 8 abgewandten Seite der Photokathode 9. Die Photokathode 9 kann aus einem alkalimetallhaltigen Material bestehen und auf die Rückseite des Eintrittsfensters 8 aufgedampft sein. Über eine elektrisch leitende Versorgungsverbindung 11 ist die Photokathode 9 mit einer nicht dargestellten elektronischen Strom-/Spannungsversorgung verbunden. Die Photokathode 9 liegt auf einem negativen Potential gegenüber dem Elektronendetektor-Pixel-Array 12, welches nachfolgend noch beschrieben wird, und einer oder mehrerer Elektroden, die sich benachbart zu dem Elektronendetektor-Pixel-Array 12 befinden.

Im Gehäuse 7 sind weiterhin mindestens eine Spule 13 sowie Platten oder Drähte 14 einer Elektronenoptik 15 angeordnet. Zur Elektronenoptik 15 gehört zudem noch eine Spule 16, die außerhalb des Gehäuses 7 angeordnet ist. Die Komponenten 13, 14 und 16 der Elektronenoptik 15 sind über Versorgungsverbindungen 17 mit der nicht dargestellten Strom-/Spannungsversorgung verbunden.

Die Platten oder Drähte 14 der Elektronenoptik 15 und die Photokathode 9 erzeugen beim Betrieb des Photonendetektors 1 ein elektrisches Feld, welches die Photoelektronen beschleunigt. Vorzugsweise haben die Photoelektronen bei ihrem Auftreffen auf die Detektoranordnung eine Energie die deutlich größer ist als die Energie der einfallenden Photonen 6. Diese Energie beim Auftreffen beträgt beispielsweise 20 keV. Die Photoelektronen bewegen sich in diesem Feld mit Vorzugsrichtung von der Photokathode in Richtung auf das Elektronendetektor-Pixel-Array 12. Der Feldverlauf und die Feldstärke des elektrischen Felds werden durch Form, Größe und Positionen der Photokathode 9 und der elektrisch leitenden Platten oder Drähte sowie den an diesen Komponenten anliegenden elektrischen Spannungen beeinflusst.

Die Feldverteilung kann durch Wahl der Form, Größe und Lage der Photokathode 9 und der elektrisch leitenden Platten 14 sowie deren Spannungen so gestaltet werden, dass eine in guter Näherung eineindeutige Abbildung des Orts des Auslöseprozesses des Photoelektrons auf den Ort des Auftreffens des beschleunigten Photoelektrons auf die Anordnung von Detektoren, gegeben ist. Die Spulen 13, 16 erzeugen, wenn durch sie ein elektrischer Strom fließt, ein magnetisches Feld, das die Bahnen der Photoelektronen beeinflusst und so zur Modifikation der elektronenoptischen Abbildung führt. Dies kann der Optimierung der elektronenoptischen Abbildung dienen.

Die Abbildungseigenschaft der Elektronenoptik 15 kann mit Hilfe von bekannten Elektronentransportprogrammen in guter Näherung berechnet und beim Design des Geräts optimiert werden. Es kann davon ausgegangen werden, dass die Abbildungsvorschrift B: $(x^{Photokathode}, y^{Photokathode}) \rightarrow (x^{Array}, y^{Array})$ für Photoelektronen bekannt, wohlbestimmt und zwischen kleinen Flächenelementen $\Delta x^{Photokathode} \Delta y^{Photokathode}$ am Ort $(x^{Photokathode}, y^{Photokathode})$ und $\Delta x^{Array} \cdot \Delta y^{Array}$ am Ort $(x^{Array}, y^{Arroy})$ in guter Näherung eineindeutig ist. Eineindeutigkeit der Abbildung bedeutet, dass aus allen Auftrefforten aus jedem Flächenelement $\Delta x^{Array} \cdot \Delta y^{Array}$, in welchem ein beschleunigtes Elektron eintraf und nachgewiesen wurde, in guter Näherung eindeutig ein Flächenelement $\Delta x^{Photokathode} \cdot \Delta y^{Photokathode} \Delta y^{Photokathode}$, in dem das Photoelektron ausgelöst wurde, ermittelt werden kann. Dies kann zum Beispiel durch Verwendung der invertierten Abbildungsvorschrift oder durch Verwendung von Lookup-Tabellen in der Ausleseeinheit oder in angeschlossenen Auswertegeräten geschehen. Die elektronenoptische Abbildung kann dergestalt konzipiert werden, dass die durch $\Delta x^{Photokathode} \cdot \Delta y^{Photokathode}$ definierten Kathodenflächenelemente größer sind als die zugehörigen Sensorflächenelemente $\Delta x^{Array} \cdot \Delta y^{Array}$. In diesem Falle wirkt die Abbildung verkleinernd. Diese Situation ist in der Fig. 3 dargestellt. Die elektronenoptische Abbildung kann aber auch dergestalt konzipiert werden, dass die durch $\Delta x^{\cdot Photokathode} \Delta y^{Photokathode}$ definierten Kathodenflächenelemente kleiner sind als die zugehörigen Sensorflächenelemente $\Delta x^{Array} \cdot \Delta y^{Array}$. In diesem Falle wirkt die Abbildung vergrößernd. In diesem vergrößernden Falle kann die gesamte Kathodenfläche kleiner als die gesamte Sensorfläche ausgestaltet werden. Auf diese Art kann der maximal verarbeitbare Photonenfluss gesteigert werden.

Zwischen dem Elektronendetektor-Pixel-Array 12 und der Photokathode 9 ist eine Abschwächungsschicht 18 eines Materials angebracht, die dazu dient, vom Elektronendetektor-Pixel-Array 12 in Richtung der Photokathode 9 rückgestreute Elektronen, die sich in Richtung der Photokathode 9 bewegen, zu absorbieren. Hierbei wird ausgenutzt, dass die Energie der rückgestreuten Elektronen kleiner ist als die Energie der beschleunigten Photoelektronen und daher ihr Energieverlust beim Durchgang durch die schwächende Schicht größer ist als der Energieverlust der beschleunigten Photoelektronen. Dies reduziert bei entsprechender Wahl des Materials und der Dicke der Schicht den Anteil an unerwünschten Mehrfachansprechern.

Die Photoelektronen treffen nach oder während ihrer Beschleunigung im elektrischen Feld auf das Elektronendetektor-Pixel-Array 12. Letzteres besteht aus zumindest einer Reihe von Detektorpixeln 19, ist also zumindest eindimensional aufgebaut. In der Regel hat das Pixel-Array 12 eine Matrix aus zeilen- und spaltenweise angeordneten Detektorpixeln 19. Es können beispielsweise 65536 derartige Detektorpixel 19 als 256 x 256-Matrix angeordnet sein. Auch z. B. eine 32 x 32-Matrix ist möglich.

In der nachfolgenden Beschreibung wird davon ausgegangen, dass die Detektorpixel 19 in Zeilen und Spalten angeordnet sind. Jeder Detektorpixel 19 ist durch die Angabe der Zeile i und der Spalte j eindeutig bestimmt.

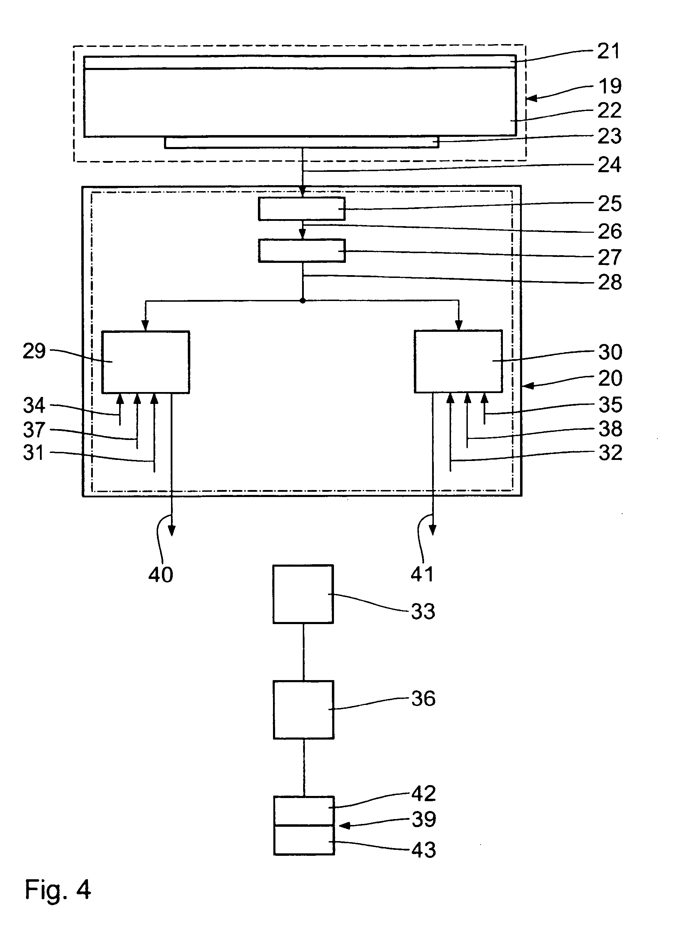

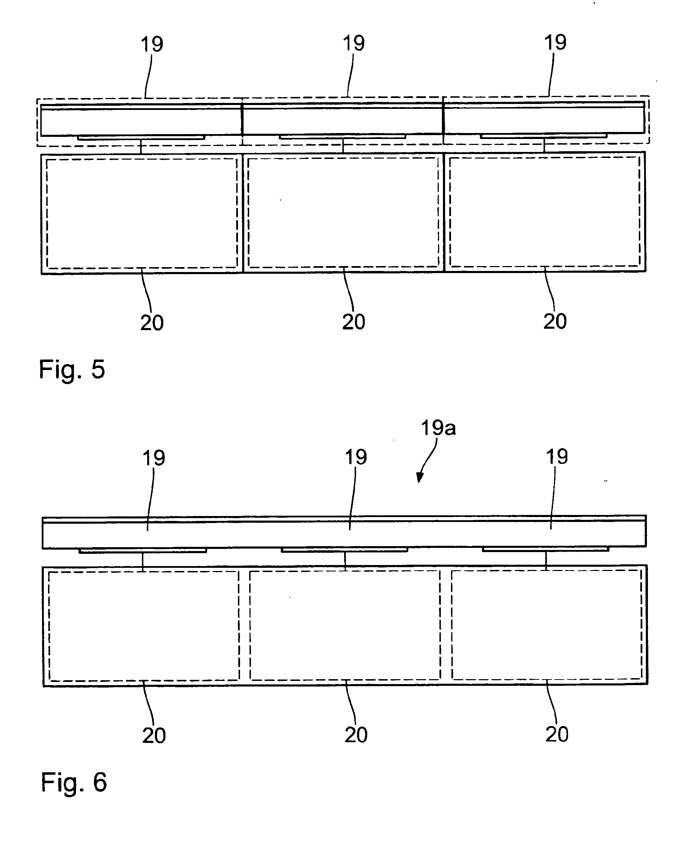

Fig. 4 zeigt den Aufbau eines der Detektorpixel 19 zusammen mit einer den Detektorpixeln 19 zugeordneten elektronischen Umsetzeinrichtung 20 und weiterer elektronischer Komponenten stärker im Detail. Fig. 5 und 6 zeigen Ausführungsvarianten nebeneinander angeordneter Detektorpixel 19. Jeder Detektorpixel 19 hat unter einer Detektorelektrode 21 eine sensitive Sensorschicht 22, die über eine weitere Detektorelektrode 23 und eine Signalleitung 24 mit einer Pulsformeinheit 25 der Umsetzeinrichtung 20 verbunden ist.

Die Umsetzeinrichtungen 20 zu allen Detektorpixeln 19 sind in einem nicht dargestellten integrierten Schaltkreis in einem Chip zusammengefasst.

Der Begriff "Detektorpixel", der hier verwendet wird, soll verdeutlichen, dass mit dem Elektronendetektor-Pixel-Array 12 eine Messung mit räumlicher Auflösung erfolgt. Die einzelnen Detektorpixel 19 können diskret aufgebaut sein, wie in der Ausführung nach Fig. 5 dargestellt, können aber auch Abschnitte einer durchgehenden Sensorschicht 19a sein, wie in der Ausführung nach Fig. 6 dargestellt, wobei die Ortsauflösung durch die räumliche Nähe des jeweiligen Sensorschicht-Abschnitts zur diesem zugeordneten Umsetzeinrichtung 20 gewährleistet ist. Über die Sensorschicht 19a können die Detektorpixel also mechanisch miteinander verbunden sein. Beide in den Fig. 5 und 6 dargestellten Varianten der Detektorpixel 19 können zum Elektronendetektor-Pixel-Array 12 in einem gemeinsamen Chip integriert sein.

In der Pulsformeinheit 25 kann eine Vorverstärkung, eine Integration, sowie eine sonstige analoge Aufbereitung des durch das auf den Detektorpixel 19 auftreffende Messelektron erzeugten Analog-Messsignals erfolgen.

Die Sensorschicht 19a des Detektorpixels 19 ist aus einem Halbleitermaterial. Trifft ein aus der Photokathode 9 ausgelöstes Photoelektron am Ende der Photoelektronenbahn 10 auf den Detektorpixel 19, so setzt es durch Stoßprozesse in der Sensorschicht des Detektorpixels 19 Elektron-Loch-Paare frei. Je nach Richtung des zwischen den Detektorelektroden 21, 23 angelegten elektrischen Feldes driften Elektronen oder Löcher in Richtung zur der Umsetzeinrichtung 20 zugewandten Detektorelektrode 23. Dies erzeugt in der Signalleitung 24 ein Stromsignal, im Folgenden auch als Analog-Messsignal bezeichnet, welches zunächst in der Pulsformeinheit 25 vorverarbeitet wird.

Die Pulsformeinheit 25 steht über eine weitere Signalleitung 26 mit einem Diskriminator 27 in Signalverbindung. In letzterem ist ein Schwellenwert abgelegt. Der Schwellenwert des Diskriminators 27 wird auf einen Wert gesetzt, der kleiner ist als das maximale Signal, das ein einzeln beschleunigtes Photoelektron der Maximalenergie, die es in der Elektronenoptik 15 gewinnen kann, in dem Eingang der Umsetzeinrichtung 20 hervorruft. Dabei wird natürlich auch die Abschwächung durch die Abschwächschicht 18 berücksichtigt. Im Diskriminator 27 wird das aufbereitete Analog-Messsignal nach der Pulsformeinheit 25 auf seine Stärke hin durch einen Vergleich mit dem Schwellenwert analysiert. Wenn das aufbereitete Analog-Messsignal den Schwellenwert überschreitet, lässt der Diskriminator 27 das aufbereitete Analog-Messsignal durch. Letzteres wird an eine Zähler-Signalleitung 28 weitergeleitet. Dieses weitergeleitete Signal wird nachfolgend auch als Zählertrigger oder Triggersignal bezeichnet. Alternativ zum Durchlassen des Analog-Messsignals ist es möglich, dass der Diskriminator 27 bei Überschreiten des Schwellwertes ein Trägersignal erzeugt. In der Umsetzeinrichtung 20 können neben dem Diskriminator 27 auch noch weitere Diskriminatoren vorliegen.

Die Zähler-Signalleitung 28 ist mit zwei Zählern 29, 30 der Umsetzeinrichtung 20 verbunden. Alternativ ist es auch möglich, den Diskriminator 27 mit den beiden Zählern 29, 30 über zwei separate Zähler-Signalleitungen 28 zu verbinden. Die beiden Zähler 29, 30 sind über Enable-Leitungen 31, 32 in nicht näher dargestellter Weise mit einer Zählerwechsel-Steuereinrichtung 33 verbunden. Auf der Enable-Leitung 32 liegt jeweils das invertierte Signal der Enable-Leitung 31 vor. Es ist also immer genau einer der Zähler 29, 30 aktiv. Die beiden Zähler 29, 30 werden über Signalleitungen 34, 35, die in nicht näher dargestellter Weise mit einem Taktgeber 36 verbunden sind, mit einem Zähltakt versorgt. Der Taktgeber liefert Taktpulse mit einer Frequenz von z. B. 500 MHz. Über Steuerleitungen 37, 38 stehen die Zähler 29, 30 in nicht näher dargestellter Weise mit einer elektronischen Weiterverarbeitungseinrichtung 39 in Signalverbindung. Mit der Weiterverarbeitungseinrichtung 39 stehen die Zähler 29, 30 zudem über Ausleseleitungen 40, 41 in Signalverbindung. Jeweils einer der Zähler 29, 30 eines Detektorpixels kann über andere Zähler anderer Detektorpixel mit der Weiterverarbeitungseinrichtung 39 in Verbindung stehen. Die derart miteinander in Verbindung stehenden Zähler können nach Art eines Schieberegisters aufgebaut sein, was das Auslesen der Zähler vereinfacht.

Das vom Diskriminator 27 durchgelassene Triggersignal auf der Zähler-Signalleitung 28 löst eine Zählmessung beim jeweils aktiven Zähler 29, 30 aus. Dabei kann das Triggersignal für den jeweils aktiven Zähler 29, 30 ein Zähl-Start- oder ein Zähl-Stopp-Signal darstellen.

Bei der Alternative Zähler-Start-Signal beginnt der aktive Zähler 29 oder 30 beim Eintreffen des Triggersignals mit der Zählung der Taktpulse bis zum nächsten von der Weiterverarbeitungseinrichtung 39 vorgegebenen Referenzzeitpunkt $t_{Start}$, so dass der Auftreffzeitpunkt des Photons $t^{Photon}$ welches das Analog-Messsignal ausgelöst hat, eindeutig bestimmt ist.

Bei der Variante Zähler-Stopp-Signal beendet der jeweils aktive Zähler 29 oder 30 seinen Zählvorgang, der zum letzten von der Weiterverarbeitungseinrichtung 39 vorgegebenen Referenz-Zeitpunkt $t_{Start}$ begonnen hat. Auch hierdurch ist also der Auftreffzeitpunkt $t^{Pholon}$ des das Analog-Messsignal auslösenden Photons genau definiert.

Bei der nachfolgenden Beschreibung des Photonendetektors 1 wird von der Variante Zähler-Start-Signal ausgegangen.

Der von den jeweils aktiven Zählern 29, 30 gemessene Zählerstand, also die Anzahl der Taktpulse zwischen dem Referenz-Zeitpunkt tStart und dem Zeitpunkt $t^{Messung}$ des Ankommens des durch den Diskriminator 27 nicht unterdrückten Analog-Messsignals am aktiven Zähler 29, 30 stellt ein digitales Zeitsignal dar, mit welchem der Auftreffzeitpunkt des gemessenen Photons 6 eindeutig bestimmt ist. $t^{Messung}$ ist gegenüber $t^{Photon}$ um die Laufzeit des Diskriminatorsignals hin zum Zähler verzögert. Die Zeitpunkte $t^{Photon}$ und $t^{Messung}$ weisen einen festen zeitlichen Abstand zueinander auf, der einen reinen Apparateparameter darstellt. $t^{Photon}$ und $t^{Messung}$ haben als Zeitpunkt daher den gleichen Informationsgehalt.

In der Umsetzeinrichtung 20 kann jedem der beiden Zähler 29, 30 noch ein weiterer Zähler zugeordnet sein. Dieser ist so aufgebaut, dass er Taktpulse der gleichen Frequenz wie die Taktpulse des ihm zugeordneten Zählers 29, 30 zählt. Dieser weitere Zähler ist mit dem Taktgeber 36 so verschaltet, dass die Taktpulse an dem weiteren Zähler mit einer festen zeitlichen Verzögerung ankommen bzw. von diesem mit einer festen zeitlichen Verzögerung registriert werden. Diese Verzögerung beträgt vorzugsweise die Hälfte des Abstandes zweier aufeinander folgender Taktpulse. Durch Berechnung der Differenz der Zählerstände des jeweils aktiven Zählers 29 oder 30 mit dem ihm zugeordneten weiteren Zähler lässt sich auf diese Weise eine Zeitauflösung erreichen, die besser ist als bei alleiniger Verwendung nur jeweils eines Zählers 29, 30. Die Referenz-Zeitpunkte folgen in fester Frequenz aufeinander und haben einen zeitlichen Abstand von $\Delta T_{Messphase}$. Wenn im Betrieb des Photonendetektors 1 der nächste Referenz-Zeitpunkt erreicht ist, schaltet die Zählerwechsel-Steuereinrichtung 33 das Enable-Signal um, so dass der vorher nicht aktive Zähler, z. B. der Zähler 30, nun aktiv wird, während der vorher aktive Zähler, also im Beispiel der Zähler 29, seine eventuell, d. h. abhängig vom Ankommen eines ausgelösten Photoelektrons, gestartete Zählung beendet. Der Zähler 29 gibt seinen Zählerstand dann über die Ausleseleitung 40 an die Weiterverarbeitungseinrichtung 39 weiter. Die Weiterverarbeitungseinrichtung 39 erfasst zunächst in Form einer i x j-Matrix die Zählerstände aller aktiven Zähler 29 des Elektronendetektor-Pixel-Arrays 12. Nach dem Auslesen über die Ausleseleitung 40 jeder Umsetzeinrichtung 20 werden die ausgelesenen Zähler 29 über die Steuerleitung 37 wieder auf Null zurückgesetzt. Dies geschieht alles, solange der andere Zähler 30 messbereit ist. Nach dem Rücksetzen wartet der nicht aktive Zähler 29, bis der nächste Referenz-Zeitpunkt erreicht ist. Dann wird das Enable-Signal wieder umgesetzt und der Zähler 29 beginnt zu zählen, während der Zähler 30 entsprechend dem vorstehend Ausgeführten ausgelesen wird. Dies ermöglicht eine totzeitfreie Messung.

Die Referenz-Zeitpunkte werden mit einer Frequenz von beispielsweise 10 kHz gesetzt. Entsprechend ist auch die Auslesefrequenz des Photonendetektors 1 10 kHz.

In der Weiterverarbeitungseinrichtung 39 erfolgt eine Auswertung der Zählerstände. Alle Zählerwerte Null gehören zu Detektorpixeln 19, bei denen kein Photoelektron während der Messzeit des Zählers registriert wurde.

Eine Datenreduktion kann neben dem vorstehend beschriebenen Ignorieren der Zählerstände Null auch dadurch erreicht werden, dass Daten zu Zählerständen, die den gleichen Wert haben, also Daten, bei denen bei verschiedenen Detektorpixeln 19 gleichzeitig ein Messsignal ausgelöst wurde, zusammengefasst werden.

Die zeit- und ortsaufgelösten Daten, die über die Ausleseleitung 40, 41 der Umsetzeinrichtungen 20 aller Detektorpixel 19 an die Weiterverarbeitungseinrichtung 39 weitergegeben werden, können nach Abschluss von mehreren Messphasen zwischen zeitlich benachbarten Referenz-Zeitpunkten oder nach Abschluss jeder einzelnen Messphase durch Algorithmen weiterverarbeitet werden. Durch eine Übertragungseinheit 42 ist auch eine Übertragung an extern angeschlossene Geräte sowie eine Anzeige und Speicherung möglich.

Neben der Übertragungseinheit 42 gehört zur Weiterverarbeitungseinrichtung 39 noch eine Ausleseeinheit 43. Die Ausleseeinheit 43 hat die Aufgabe, die Zählerstände der Detektorpixel 19 nach Ablauf ihrer jeweiligen Messzeit auszulesen, eventuell zu verarbeiten oder zu reduzieren. Sie fügt eventuell Informationen, zum Beispiel die Adressen der getroffenen Detektorpixel 19, hinzu. Die Daten werden von der Ausleseeinheit 43 an die Übertragungseinheit 42 weitergegeben. Die Ausgabedaten der Ausleseeinheit 43 liegen in digitaler Form vor.

Die Ausleseeinheit 43 ist eine elektrische Schaltung, deren Teile vorzugsweise als integrierte Schaltkreise realisiert sind. Die Elektronikuntereinheit der Ausleseeinheit 43, welche maßgeblich dem Auslesen der Zählerstände dient, ist vorzugsweise als integrierter Schaltkreis auf dem Chip, der die Detektorelektronikeinheiten beherbergt, realisiert und befindet sich deshalb innerhalb der Umhüllung. So entsteht eine kompakte Anordnung aus Detektorpixeln 19 und Teilen der Ausleseeinheit 43 bzw. der Weiterverarbeitungseinheit 39. Teile der Ausleseeinheit 43 bzw. der Weiterverarbeitungseinheit 39, die zum Beispiel der Auswertung dienen, können sich auch außerhalb der Umhüllung befinden. Die Ausleseeinheit 43 kann aus mehreren elektrischen Schaltkreisen bestehen.

Die Zählerstände werden in der Auslesephase an die Ausleseeinheit 43 nacheinander oder in Gruppen übertragen. Die Ausleseeinheit 43 arbeitet z. B. nach Art eines Schieberegisters. Dabei werden die Zählerstände der jeweils auszulesenden Zähler 29, 30 in die Ausleseeinheit 43 überführt und zeilenweise in diese ausgeschoben. Auch die Zähler 29, 30 können während der Auslesephase als Schieberegister fungieren.

Die Ausleseeinheit 43 gibt die Zählerstände, eventuell ergänzt um Adressinformationen, welche die Detektorpixel 19 bestimmen, die zu den Zählerständen gehören, oder eine Teilmenge der Zählerstände und Adressdaten oder aus den Zählerständen und Adressdaten berechnete Werte an die Übertragungseinheit 42 weiter.

In der Ausleseeinheit 43 können alle Zeitpunkte oder Orte der Registrierung von Elektronen in den Detektorpixeln 19 und daraus die Zeitpunkte oder Orte des Eintreffens der entsprechenden Photonen aus den Zählerständen bestimmt werden. Einige mögliche Verfahren zur Bestimmung der Größen werden nun erläutert. Die mittlere Flugzeit $\Delta t_{ij}^{Photoelektron}$ der Photoelektronen vom Punkt ihrer Auslösung zum Punkt des Auftreffens auf den Sensor der Detektoreinheit in Zeile i und Spalte j kann aus dem elektrischen und magnetischen Feldverlauf berechnet werden. Die Flugzeit kann in der Berechnung des Auftreffzeitpunkts des Photons auf der Photokathode verwendet werden. Ebenso kann die Zeitdauer $\Delta t^{Konversion}$ zwischen Eintreffen des Elektrons auf dem Sensor und dem Zeitpunkt des zu diesem Einschlag gehörenden Startvorgangs des Zählens von Taktgeberpulsen mittels Rechnungen oder Messungen bestimmt werden. Für den Zeitpunkt t$^{Photon}$ des Auftreffens des Photons auf der Kathode gilt damit in guter Näherung:

$$t_{ij}^{Photon} = t_{Start} + (\Delta T_{Messphase} - N_{ij} \cdot \Delta t_{Clock}) - \Delta t^{Konversion} - \Delta t_{ij}^{Photoelektron}$$ für alle i und j mit $N_{ij} > 0$. t$_{start}$ bezeichnet den jeweils letzten Referenz-Zeitpunkt. t$_{Clock}$ bezeichnet den zeitlichen Abstand zwischen zwei Taktimpulsen. $N_{ij}$ bezeichnet den Zählerstand des jeweils aktiven Zählers der Umsetzeinrichtung 20 des Detektorpixels 19 in der Zeile i und der Spalte j. Die oben definierten Zeitpunkte t$^{Messung}$ sind gegeben durch: $t_{ij}^{Messung} = t_{Start}$

$+ (\Delta T_{Messphase} - N_{ij} \cdot \Delta t_{Clock})$ für alle i und j mit > 0.

Definiert man eine Menge von Zahlen , $\Phi_{ij}^{Photoelektronen} = 1$ wenn $N_{ij} > 0$, und $\Phi_{ij}^{Photoelektronen} = 0$, wenn $N_{ij}$ = 0 erhält man eine Abtastung der räumlichen Verteilung der Auftrefforte der Photoelektronen auf der Detektoranordnung. Ist die Fläche des Sensors eines jeden Detektorpixels klein, kann näherungsweise angenommen werden, dass die Photoelektronen in der geometrischen Mitte der Sensoroberfläche des Detektorpixels in Zeile i und Spalte j, gekennzeichnet durch den Ort $(x_{ij}^{Array}, y_{ij}^{Array})$ , auftrafen. Damit ergibt sich aus den Zählerständen aller Detektorpixel die Abtastung der Verteilung der Photoelektronenauslösungsorte und damit in guter Näherung der Auftrefforte der Photonen, die zu Photoelektronen führten, zu: $\Phi^{Photonen}(x_{ij}^{Photokathode}, y_{ij}^{Photokathode}) := \Phi_{ij}^{Photoelektronen}$ mit

$$(x_{ij}^{Photokathode}, y_{ij}^{Photokathode}) = B^{-1}(x_{ij}^{Array}, y_{ij}^{Array})$$

Die Zuordnung $(x_{ij}^{Array}, y_{ij}^{Array})$ zu $(x_{ij}^{Photokathode}, y_{ij}^{Photokathode})$ kann zum Beispiel durch eine Lookup-Tabelle oder einen mathematischen Algorithmus in der Ausleseeinheit in einem extern angeschlossenen elektronischen Gerät durchgeführt werden. Diese Zuordnung kann auch nach Abschluss aller Messphasen nachträglich durchgerührt werden.

Definiert man $\Phi^{Photonen}(x_{ij}^{Photokathode}, y_{ij}^{Photokathode}, t_{ij}^{Photon}) := \Phi_{ij}^{Photoelektronen}$ an dem oben bereits definierten Zeitpunkt $t_{ij}^{Photon}$ des Auftreffen eines Photons, dessen ausgelöstes Photoelektron in dem Detektorpixel in Zeile i und Spalte j registriert wurde, erhält man eine Abtastung der räumlichen und zeitlichen Verteilung der einfallenden Photonen, welche Photoelektronen ausgelöst haben. Der Zeitpunkt des Auftreffens des ersten Photons, dessen Photoelektron registriert wurde, ist gegeben durch $t_{mn}^{Photon}$ wobei $t_{mn}^{Photon} < t_{ij}^{Photon}$ für alle i,j mit $i \neq m$ und $j \neq n$ gelten muss. Durch einen einfachen Algorith-mus, dieser implementiert in der Ausleseeinheit oder in externen Geräten, lässt sich so der zeitliche Beginn eines Photonenpulses, welcher auf die Kathode trifft, berechnen und in externen Geräten zur Anzeige bringen.

Teilt man die Messzeit $\Delta T_{Messphase}$ in N gleichlange Zeitintervalle ein, erhält man eine Folge von (N+1) Zeitpunkten $T_i^{Intervall} = t_{Start} + i \cdot \Delta T_{Messphase} / N$ , wenn i ganzzahlige Werte von 0 bis N annimmt. Wird in der Ausleseeinheit oder in einem externen Auswertegerät für jedes Intervall $I_k = [T_k^{Intervall}, T_{k+1}^{Intervall}]$, wobei k ganzzahlige Werte von 0 bis (N-1) annimmt, die Anzahl $A_k$ (A wie Amplitude) aller Detektorpixel der gesamten A-nord-nung bestimmt, deren Zählerstände Zeiteinträge $t_{ij}^{Photon}$ in diesem Intervall $I_k$ haben, so stellt die derart erhaltene Folge $A(t_k) := A_k$ mit

$t_k = (T_k^{Intervall} + T_{k+1}^{Intervall}) / 2$ eine zeitlich äquidistante Abtastung der Pulsform des Photonenpulses dar, der während einer Messzeit auf die Photokathode einfiel.

Eine im Allgemeinen zeitlich nicht äquidistante Abtastung der Pulsform des Photonenpulses erhält man durch aufsteigende Sortierung der Zeiten $t_{ij}^{Photon}$ der aus den Zählerständen aller Detektorpixel einzeln ermittelten Zeiten oder durch eine absteigende Sortierung der Zählerstände der Detektorpixel, welche ein Photoelektron in der Messzeit registrierten. Diese Sortierung kann auch für die jeweils innerhalb eines bestimmen Intervalls $I_k$ registrierten Zeiten von der Ausleseeinheit oder externen Geräten durchgeführt werden. Diese Sortierungen und Auswertungen können auch auf bestimmte Untermengen der Menge aller Zähler, zum Beispiel auf Zähler bestimmter Gebiete der Detektorpixelanordnung, eingeschränkt und von der Ausleseeinheit oder externen Geräten durchgeführt werden. So lassen sich Pulsformen von Photonenpulsen, die in verschiedenen Gebieten der Photokathode Elektronen auslösten, abtasten. Diese Abtastungen der Pulsform werden in der Ausleseeinheit oder im externen Auswertegerät als Algorithmus durchgeführt. Eine solche Abtastung ist das Äquivalent eines in der Zeit digitalisierten analogen Ausgangspulses eines Photomultipliers. Bei Verwendung eines Photomultipliers erhält man die digitalisierte Form dieses Pulses in der Regel durch Verwendung eines FADC (Fast Analog Digital Converter; schneller A/D-Wandler).

Des Weiteren können charakteristische Zeitpunkte der Verteilung der Auftreffzeiten der Photonen in der Ausleseeinheit ermittelt werden. Ein Beispiel hierfür ist die Bestimmung des Zeitpunkts des Maximums des Photonenflusses oder die Bestimmung des Zeitpunkts des Eintreffens des ersten Photons. Diese Größen lassen sich leicht aus der Folge $A(t_k)$ ermitteln. Es kann auch die Anzahl der Photonen in einem Intervall in der Nähe des Zeitpunkts des Maximums des Photonenflusses bestimmt werden. Die An-zahl der Photonen in einem Intervall in der Nähe des Maximums ergibt sich als $A(t_m)$ wobei $A(t_m) \geq A(t_i)$ für alle $i \neq m$ gelten muss. Bei Verwen-dung eines Photomultipliers erhält man eine der Anzahl der Photonen im Maximum äquivalente Größe zum Beispiel durch Verwendung eines an den Ausgang des Photomultipliers angeschlossenen Pulshöhen-ADC.

Eine weitere Größe, die bestimmt werden kann, ist die Summe der Photonen $E_{u \to v}$, die mit einem Photonenpuls auf die Fläche fielen und Photoelektronen auslösten: $E_{u \to v} = \sum_{k=u}^{v} A(t_k)$ wobei u die, Nummer des Zeitintervalls ist, in dem das erste Photon auf die Fläche fiel. v gibt die Nummer des Intervalls an, in dem der Endzeitpunkt des Photonenpulses liegt. Diese Intervale sind aus der oben beschriebenen Sortierung der Zählerstände leicht zu ermitteln.

Diese Größe $E_{u \to v}$ ist äquivalent zur Ladung, die in einem entsprechenden von dem Photonenpuls ausgelösten analogen Photomultiplierpuls geflossen wäre. Bei Verwendung eines Photomultipliers erhält man diese Größe zum Beispiel durch Verwendung eines an den Ausgang des Photomultipliers angeschlossenen QDC (Charge (Q)-Digital-Konverter).

Wie oben bereits beschrieben, sind zwei Photonenpulse dadurch voneinander abgrenzbar, dass die beiden zugehörigen einfallenden Photonenensembles, entweder mit einem zeitlichen Unterschied, dieser größer als die Dauer der Photonenpulse, auf der Fläche auftreffen oder aber mit einem Abstand der Schwerpunkte der Auftrefforte, dieser groß gegenüber der räumlichen Ausdehnung der einzelnen Photonenpulse, auf der Fläche auftreffen. Mit den Informationen, die in dem von uns erfundenen Gerät generiert werden, ist sowohl die räumliche, als auch die zeitliche Trennung von dicht aufeinanderfolgenden Photonenpulsen möglich.

In der Ausleseeinheit oder externen Geräten kann ein Algorithmus nach einer Menge von Detektorpixeln suchen und diese identifizieren, die gleichzeitig mit einer geringen zeitlichen Verzögerung zueinander Photoelektronen registriert haben, welche innerhalb der erwarteten Photonenpulsbreite liegen. Es könnte dann angenommen werden, dass die in der so identifizierten Menge von Detektorpixeln registrierten Photoelektronen aus einem einzelnen Photonenpuls stammen. Es kann dann die örtliche und zeitliche Verteilung der Photonen dieses Pulses gemäß den oben beschriebenen Verfahren, unter Einschränkung der Berechnungen und Analysen auf die so identifizierte Menge von Detektorpixeln, ermittelt werden. Größen, wie zum Beispiel die gesamte Anzahl von Photonen in diesem Puls, die maximale Photonenzahl in einem der kurzen Zeitintervalle $I_k$, der Zeitpunkt des Eintreffens des ersten Photons dieses Photonenpulses oder andere charakteristische Zeiten können analog obiger Verfahren aus den Zählerständen der identifizierten Detektorpixel bestimmt werden.

Ebenso kann nach Mengen von Detektorpixeln in vorzugebenden Regionen in der Anordnung von Detektorpixeln gesucht und diese identifiziert werden, wenn sie ein Photoelektron innerhalb eines vorzugebenden Zeitintervalls, das der Photonenpulsbreite entsprechen sollte, registriert haben. Es kann dann angenommen werden, dass die in den Detektorpixel eines Gebiets registrierten Photoelektronen aus demselben Photonenpuls stammen. Eine Einschränkung der oben beschriebenen Auswerteverfahren auf diese Menge der so identifizierten Detektorpixel eines Gebiets liefert Informationen über die räumliche und zeitliche Verteilung des Eintreffens der Photonen der entsprechenden Photonenpulse auf der Photokathode. Diese Möglichkeit eröffnet neue Möglichkeiten beim Bau großflächiger Nachweisgeräte für Photonen. Unter Verwendung von Photomultiplier werden Ortsinformationen bei der Detektion von Teilchen mit Szintillationszählern entweder durch Einsatz mehrerer Photomultiplier oder durch Einsatz von Photomultipliern mit segmentierten Kathoden, diese über Lichtwellenleiter an bestimmte Bereiche des strahlungssensitiven Mediums optisch angekoppelt, gewonnen. Mit dem von uns erfundenen Gerät wird es in bestimmten Fällen möglich, auf die Verwendung von Lichtwellenleitern zu verzichten. Die Ortsauflösung des von uns erfundenen Geräts kann bei entsprechender Auslegung der Elektronenoptik und kleinen sensitiven Flächen der Detektoren erheblich besser sein, als die erreichbare Ortsauflösung bei der Verwendung von segmentierten Photomultipliern oder mit Einsatz von Lichtwellenleitern in Verbindung mit mehreren Photomultipliern.

Ein Photoelektron, welches im Sensor Energie deponiert, verursacht unter Umständen in nahe bei einander liegenden Detektorpixeln annähernd gleichzeitig die Auslösung eines Diskriminatorpulses. Dieser Effekt kommt beim Einsatz eines pixelierten Halbleiterdetektors zum Beispiel durch den Effekt des Charge-Sharing zustande. Dabei erreicht die im elektrischen Feld des Sensors driftende Verteilung von freien Ladungsträgern bei ihrem Ankommen an der Pixelelektrode unter Umständen auch benachbarte Pixelelektroden, was zum annähernd gleichzeitigen Ansprechen der beiden Detektorpixel führt. In der Ausleseeinheit können diese Ereignisse identifiziert werden, da sie dadurch gekennzeichnet sind, dass die fast gleichzeitig ansprechenden Detektorpixeln sehr geringe Unterschiede in den ausgelesenen Zählerständen aufweisen. Diese Ereignisse können in der Ausleseeinheit oder in extern angeschlossenen Geräten bei der Auswertung als nur zu einem einfallenden Photon gehörig betrachtet werden.

Die in der Ausleseeinheit generierten Daten oder die Zählerstände mit eventuell hinzugefügten Ortsinformationen über die zu den Zählerständen gehörenden Detektorpixeln können über die Übertragungseinheit, ein integrierter Schaltkreis mit angeschlossenen Kabel oder einer optischen Faser, oder direkt über ein elektrisches Kabel oder eine optische Faser an externe Geräte zur Anzeige oder zur weiteren Verarbeitung der Daten übertragen werden.

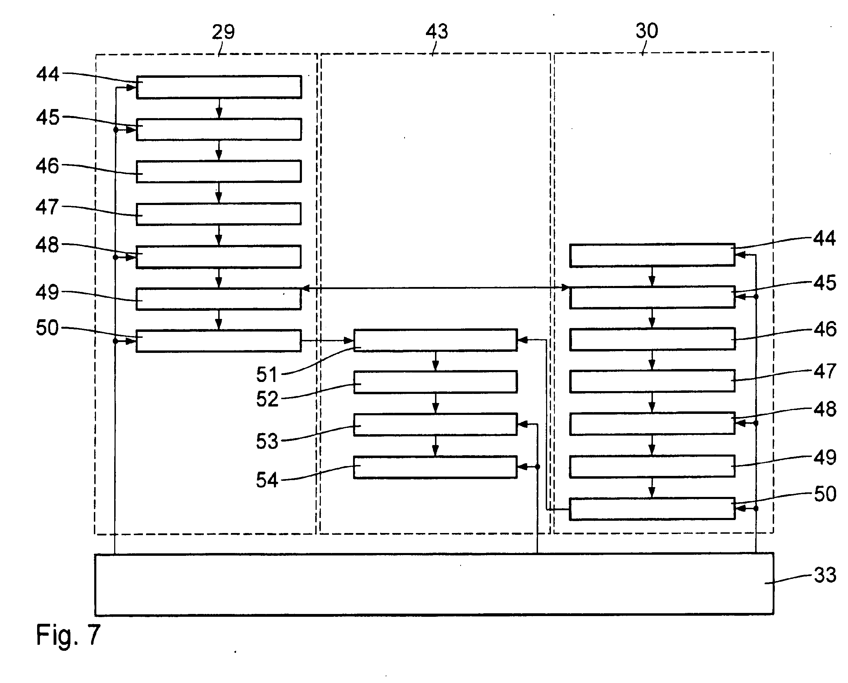

Fig. 7 zeigt schematisch die beim Messvorgang ablaufenden Schritte. 44 bezeichnet den Initialisierungsschritt des Zählers 29. Beim Bereitstellungsschritt 45 ist der Zähler 29 zum Zählen bereit und der Zähler 29 wird zum nächsten Referenz-Zeitpunkt auf "Enable" umgestellt. 46 bezeichnet das Auslösen des Zählers 29 durch das Triggersignal, also einen Triggerschritt. 47 und 48 bezeichnen die Zählphase des Zählers 29. 49 bezeichnet den Abschluss des Zählens. Gleichzeitig mit dem Abschlussschritt 49 findet der Bereitstellungsschritt 45 beim Zähler 30, synchronisiert über die Zählerwechsel-Steuereinrichtung 33, statt. 50, 51 bezeichnen einen Transferschritt des Zählerstandes des Zählers 29 aus dem Zähler 29 hin zur Ausleseeinheit 43. 52 bezeichnet einen Löschschritt für den Zählerstand, soweit dieser beispielsweise Null beträgt. Bei 52 wird, wenn der Zählerstand nicht gelöscht wird, eine Adressinformation hinzugefügt, die einen Rückschluss des Zählerstandes zur Position ij zulässt. Beim Übertragungsschritt 53 werden die nicht gelöschten Zählerstände mit ihren Adressen an die Übertragungseinheit 42 übertragen. Zudem werden beim Übertragungsschritt 54 die nicht gelöschten Zählerstände sowie die zugehörigen Adressen an externe Geräte übertragen oder gespeichert. Entsprechend laufen, zeitlich versetzt um den Abstand zwischen zwei aufeinander folgenden Referenz-Zeitpunkten, die Schritte 44 bis 50 im Zähler 30 ab.

Haupteinsatzgebiete des Photonendetektors 1 sind die Durchführung von Kem-, Teilchenphysik- und Astroteilchenphysik experimente, der Einsatz in Positronenemissionstomographie-Geräten, in einer Single-Photon-Emission-Computed-Tomographie-Kamera, in Röntgenbildverstärkern oder als Nachtsichtgerät.

## Patentansprüche

1.  Photonendetektor (1)

    - mit einer Photokathode (9) zum photoneninduzierten Auslösen von Messelektronen;
    - mit einem zumindest eindimensionalen Elektronendetektor-Pixel-Array (12);
    - mit einer Elektronenoptik (15) zur Führung der Messelektronen hin zum Elektronendetektor-Pixel-Array (12);
    - wobei jedes Pixel (19) des Elekironendetektor-Pixel-Arrays (12) aufweist:

        -- eine elektronische Umsetzeinnchtung (20) zum Umsetzen eines Analog-Mrsssignals des Pixels (19) in ein Digital-Messsignal, wobei die Umsetzeinrichtung (20) einen Diskriminator (27) aufweist;

    - mit einer elektronischen Weiterverarbeitungseinrichtung (39) zur

    Weiterverarbeitung des Digital-Messsignals,
    **dadurch gekennzeichnet, dass** die Umsetzeinrichtung (20) jedes Pixels (19) aufweist:

        - eine Signalverbindung mit mindestens einem Taktgeber (36);
        - mindestens einen Zähler (29, 30), der mit dem Taktgeber (36) und dem Diskriminator (27) zur Erzeugung eines digitalen Zeitsignals in Signalverbindung steht, wobei das Zeitsignal derart ist, dass es sich aus der Anzahl der Taktzyklen zwischen einem von der Weiterverarbeitungseinrichtung (39) vorgegebenen Referenz-Zeitpunkt ($t_{Start}$) und dem Zeitpunkt ($t_{Messung}$) der Ankunft eines durch den Diskriminator (27) nicht unterdrückten Analog-Messsignals am Zähler (29, 30) ergibt.

2.  Photonendetektor nach Anspruch 1, **dadurch gekennzeichnet, dass** der mindestens eine Zähler (29, 30) mit einer Steuerung (33, 39) derart verbunden ist, dass die Taktzyklen ab der Erzeugung eines nicht unterdrückten Analog-Messsignals gezählt werden.

3.  Photonendetektor nach Anspruch 1, **dadurch gekennzeichnet, dass** der mindestens eine Zähler (29, 30) mit einer Steuerung (33, 39) derart verbunden ist, dass die Taktzyklen bis zur Erzeugung eines nicht unterdrückten Analog-Messsignals gezählt werden.

4.  Photonendetektor nach einem der Ansprüche 1 bis 3, **dadurch gekennzeichnet, dass** eine Steuereinrichtung (33, 39) mit mindestens einem Zähler (29, 30) derart zusammenarbeitet, dass die Referenz-Zeitpunkte ($t_{Start}$) in festen Zeitabständen vergeben werden.

5.  Photonendetektor nach einem der Ansprüche 1 bis 4, **gekennzeichnet durch** mindestens zwei Zähler (29, 30) pro Pixel (19), wobei die beiden Zähler (29, 30) so mit dem Diskriminator (27) und einer Zählerwechsel-Steuereinrichtung (33) in Signalverbindung stehen, dass in einem vorgegebenen Zeitraum zwischen zwei Referenz-Zeitpunkten ($\Delta T_{Messphase}$) genau ein Zähler (29, 30) zählt, während die vom anderen Zähler (30, 29) erzeugten Zeitsignale ausgelesen, also zur Weiterverarbeitungseinrichtung (39) weitergeleitet werden.

6.  Photonendetektor nach einem der Ansprüche 1 bis 5, **gekennzeichnet durch** mindestens zwei Zähler (29, 30) pro Pixel (19), die mit mindestens einem Taktgeber (36) so in Signalverbindung stehen, dass Taktimpulse, die vom ersten (29, 30) der beiden Zähler erfassbar sind, zeitlich zwischen benachbarten Taktimpulsen liegen, die vom zweiten der beiden Zähler erfassbar sind.

7. Photonendetektor nach einem der Ansprüche 1 bis 6, **gekennzeichnet durch** mindestens ein Schieberegister (43), welches mit den Zählern (29, 30) zur Übermittlung des digitalen Zeitsignals an die Weiterverarbeitungseinrichtung (39) derart zusammenwirkt, dass die Zählerstände der jeweils auszulesenden Zähler (29, 30) in das Schieberegister überführt und zeilenweise ausgeschoben werden.

8. Photonendetektor nach einem der Ansprüche 1 bis 7, **dadurch gekennzeichnet, dass** die Weiterverarbeitungseinrichtung (39) so ausgeführt ist, dass Zählerstände, aus denen geschlossen werden kann, dass beim dem Zählerstand zugeordneten Pixel (19) kein Messsignal ausgelöst wurde, ignoriert werden.

9. Photonendetektor nach einem der Ansprüche 1 bis 8, **dadurch gekennzeichnet, dass** die Weiterverarbeitungseinrichtung (39) so ausgeführt ist, dass Pixel (19) zu ausgelesenen Zählerständen, aus denen geschlossen werden kann, dass bei den diesen Zählerständen zugeordneten Pixeln (19) gleichzeitig ein Messsignal ausgelöst wurde, zusammengefasst werden.

10. Photonendetektor nach einem der Ansprüche 1 bis 9, **dadurch gekennzeichnet, dass** alle Umsetzeinrichtungen (20) und/oder alle Weiterverarbeitungseinrichtungen (39) in einem Bauelement integriert sind.

11. Photonendetektor nach einem der Ansprüche 1 bis 10, **dadurch gekennzeichnet, dass** die Pixel (19) diskret aufgebaut sind.

12. Photonendetektor nach einem der Ansprüche 1 bis 10, **dadurch gekennzeichnet, dass** die Pixel (19) als Abschnitte einer durchgehenden Sensorschicht (19a) gebildet sind.

13. Photonendetektor nach einem der Ansprüche 1 bis 12, **gekennzeichnet durch** eine Abschwächungsschicht (18) zwischen der Photokathode (9) und dem Elektronendetektor-Pixel-Array (12) zur Verringerung der Energie der Messelektronen.

**Claims**

1. A photon detector (1)

   - incorporating a photocathode (9) for the photon-induced triggering of measuring electrons;
   - incorporating an at least one-dimensional electron-detector pixel array (12);
   - incorporating an electron optics unit (15) for guiding the measuring electrons to the electron-detector pixel array (12);
   - wherein each pixel (19) of the electron-detector pixel array (12) has:

     -- an electronic converter unit (20) for converting an analog measuring signal of the pixel (19) into a digital measuring signal, wherein the converter unit (20) incorporates a discriminator (27);

   - incorporating an electronic post-processing unit (39) for post-processing of the digital measuring signal,

   **characterized in that** the converter unit (20) of each pixel (19) has:

   - a signal connection to at least one clock generator (36);
   - at least one counter (29, 30) that is in signal connection with the clock generator (36) and with the discriminator (27) for generating a digital timing signal; the digital timing signal being such that it results from the number of clock cycles between a time-reference point ($t_{start}$) preset by the post-processing unit (39) and the moment ($t_{measurement}$) of the arrival of an analog measuring signal that is not suppressed by the discriminator (27), at the counter (29, 30).

2. A photon detector according to claim 1, **characterized in that** the at least one counter (29, 30) is connected to a control unit (33, 39) in such a way that the clock cycles are counted starting upon the generation of an analog measuring signal that is not suppressed.

3. A photon detector according to claim 1, **characterized in that** the at least one counter (29, 30) is connected to a control unit (33, 39) in such a way that the clock cycles are counted until the generation of an analog measuring signal that is not suppressed.

4. A photon detector according to any of claims 1 through 3, **characterized in that** a control unit (33, 39) cooperates with at least one counter (29, 30) in such a way that the time-reference points ($t_{start}$) are set in fixed time intervals.

5. A photon detector according to any of claims 1 through 4, **characterized by** at least two counters (29, 30) per pixel (19), wherein the two counters (29, 30) are in signal connection with the discriminator (27) and with a counter-switching control unit (33) in such a way that exactly one counter (29, 30) is counting during a specified time period between two time-reference points ($\Delta T_{measuring\ phase}$) while the timing signals generated by the other counter (30, 29) are being read-out, i.e., routed to the post-processing unit (39).

6. A photon detector according to any of claims 1 through 5, **characterized by** at least two counters (29, 30) per pixel (19) that are in signal connection with at least one clock generator (36) in such a way that clock pulses that can be registered by the first (29, 30) of the two counters lie in time intervals between adjacent clock pulses that can be registered by the second of the two counters.

7. A photon detector according to any of claims 1 through 6, **characterized by** at least one shift register (43) that cooperates with the counters (29, 30) for transmission of the digital timing signal to the post-processing unit (39) in such a way that the counter readings of the respective counter (29, 30) to be read are routed to the shift register and pushed out in rows.

8. A photon detector according to any of claims 1 through 7, **characterized in that** the post-processing unit (39) is implemented in such a way that counter readings from which it can be inferred that no measuring signal was triggered at the pixel (19) that is associated with the counter reading are ignored.

9. A photon detector according to any of claims 1 through 8, **characterized in that** the post-processing unit (39) is implemented in such a way that pixels (19) associated with counter readings that have been read out, from which it can be inferred that simultaneous measuring signals were triggered at the pixels (19) associated with these counter readings, are combined.

10. A photon detector according to any of claims 1 through 9, **characterized in that** all converter units (20) and/or all post-processing units (39) are integrated in a single component.

11. A photon detector according to any of claims 1 through 10, **characterized in that** the pixels (19) are discrete entities.

12. A photon detector according to any of claims 1 through 10, **characterized in that** the pixels (19) are formed as segments of a continuous sensor layer (19a).

13. A photon detector according to any of claims 1 through 12, **characterized by** an attenuation layer (18) between the photocathode (9) and the electron-detector pixel array (12) for reducing the energy of the measuring electrons.

**Revendications**

1. Détecteur de photons (1),

   - avec une photocathode (9) pour déclencher des électrons de mesure, par photo-induction ;
   - avec un réseau de pixels (12) de détection d'électrons à au moins une dimension ;
   - avec une optique électronique (15) pour amener les électrons de mesure vers le réseau de pixels (12) de détection d'électrons ;
   - chaque pixel (19) du réseau de pixels (12) de détection d'électrons présentant :

      -- un dispositif de conversion électronique (20) pour convertir un signal de mesure analogique du pixel (19) en un signal de mesure numérique, ledit dispositif de conversion (20) présentant un discriminateur (27) ;

   - avec un dispositif de traitement électronique (39) pour le traitement du signal de mesure numérique,

**caractérisé en ce que** le dispositif de conversion (20) de chaque pixel (19) présente :

- une liaison de signal avec au moins une horloge (36) ;
- au moins un compteur (29, 30) en liaison de signal avec l'horloge (36) et le discriminateur (27) pour générer un signal horaire numérique, ledit signal horaire étant tel qu'il résulte du nombre des cycles d'horloge entre un instant de référence ($t_{Start}$) prédéfini par le dispositif de traitement et l'instant ($t_{Messung}$) de l'arrivée au compteur (29, 30) d'un signal de mesure non supprimé par le discriminateur (27).

2.  Détecteur de photons selon la revendication 1, **caractérisé en ce que** ledit au moins un compteur (29, 30) est relié à un dispositif de commande (33, 39) de telle sorte que les cycles d'horloge à partir de la génération d'un signal de mesure analogique non supprimé sont comptés.

3.  Détecteur de photons selon la revendication 1, **caractérisé en ce que** ledit au moins un compteur (29, 30) est relié à un dispositif de commande (33, 39) de telle sorte que les cycles d'horloge jusqu'à la génération d'un signal de mesure analogique non supprimé sont comptés.

4.  Détecteur de photons selon l'une quelconque des revendications 1 à 3, **caractérisé en ce qu'**un dispositif de commande (33, 39) coopère avec au moins un compteur (29, 30) de telle sorte que les instants de référence ($t_{Start}$) sont attribués à intervalles fixes.

5.  Détecteur de photons selon l'une quelconque des revendications 1 à 4, **caractérisé par** au moins deux compteurs (29, 30) par pixel (19), les deux compteurs (29, 30) se trouvant en liaison de signal avec le discriminateur (27) et un dispositif de commande de changement de compteur (33) de telle sorte que dans une période prédéfinie entre deux instants de référence ($\Delta T_{Messphase}$) précisément un compteur (29, 30) soit en train de compter pendant que les signaux horaires générés par l'autre compteur (30, 29) sont relevés, donc retransmis au dispositif de traitement (39).

6.  Détecteur de photons selon l'une quelconque des revendications 1 à 5, **caractérisé par** au moins deux compteurs (29, 30) par pixel (19) qui se trouvent en liaison de signal avec au moins une horloge (36) de telle sorte que des impulsions d'horloge pouvant être détectées par le premier (29, 30) des deux compteurs se trouvent chronologiquement entre des impulsions d'horloge adjacentes pouvant être détectées par le deuxième des deux compteurs.

7.  Détecteur de photons selon l'une quelconque des revendications 1 à 6, **caractérisé par** au moins un registre à décalage (43) coopérant avec les compteurs (29, 30) pour la transmission du signal horaire numérique au dispositif de traitement (39) de telle sorte que les positions du compteur des compteurs (29, 30) respectivement à relever sont transférées au registre à décalage et sorties ligne par ligne.

8.  Détecteur de photons selon l'une quelconque des revendications 1 à 7, **caractérisé en ce que** le dispositif de traitement (39) est réalisé de telle sorte que des positions de compteur permettant de conclure qu'aucun signal de mesure n'a été déclenché au niveau du pixel (19) attribué à la position de compteur sont ignorées.

9.  Détecteur de photons selon l'une quelconque des revendications 1 à 8, **caractérisé en ce que** le dispositif de traitement (39) est réalisé de telle sorte que des pixels (19) à des positions de compteur relevées permettant de conclure qu'au niveau des pixels (19) associés à ces positions de compteur un signal de mesure a été déclenché, sont regroupés.

10. Détecteur de photons selon l'une quelconque des revendications 1 à 9, **caractérisé en ce que** tous les dispositifs de conversion (20) et/ou tous les dispositifs de traitement (39) sont intégrés dans un seul composant.

11. Détecteur de photons selon l'une quelconque des revendications 1 à 10, **caractérisé en ce que** les pixels (19) sont de structure discrète.

12. Détecteur de photons selon l'une quelconque des revendications 1 à 10, **caractérisé en ce que** les pixels (19) sont formés comme des portions d'une couche de capteur continue (19a).

13. Détecteur de photons selon l'une quelconque des revendications 1 à 12, **caractérisé par** une couche d'atténuation (18) entre la photocathode (9) et le réseau de pixels (12) de détection d'électrons pour diminuer l'énergie des électrons de mesure.

Fig. 1

Fig. 2

Fig. 3

Fig. 4

19          19          19

20          20          20

Fig. 5

19a

19          19          19

20          20          20

Fig. 6

Fig. 7

EP 2 033 015 B1

**EP 2 033 015 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20060011849 A1

### In der Beschreibung aufgeführte Nicht-Patentliteratur

- **Thierry GYS.** Particle Detectors - Principles and Techniques (3/5). CERN Academic Training Programme, 2004

- **K. Wyllie et al.** Readout of the LHCb pixel hybrid photon detectors. *Nuclear Instruments & Methods in Physics Research A,* 2005, vol. 546, 86-92